# FASCICULE DE BREVET EUROPEEN

(11) **EP 0 968 058 B1**
(45) Date de publication et mention de la délivrance du brevet: **12.10.2005**
(21) Numéro de dépôt: 98917195.4
(22) Date de dépôt: 20.03.1998
(51) Int. Cl.: B05D 1/34, B05D 5/08, D21H 27/00, C09J 7/04

(54) **PROCEDE ET DISPOSITIF D'ENDUCTION D'UN SUPPORT EN VUE DE LUI CONFERER DES PROPRIETES ANTI-ADHERENTES, AU MOYEN D'UNE COMPOSITION SILICONE RETICULABLE**
VERFAHREN UND VORRICHTUNG ZUM AUFTRAGEN EINER ANTIHAFT-BESCHICHTUNG AUF SUBSTRATEN MIT EINER HÄRTBAREN SILIKON-ZUSAMMENSETZUNG
METHOD AND DEVICE FOR COATING A SUBSTRATE TO PROVIDE IT WITH ANTIADHESIVE PROPERTIES, USING A CROSS-LINKABLE SILICON COMPOSITION

(30) Priorité: 21.03.1997 FR 9703722
(43) Date de publication de la demande: 05.01.2000
(60) Demande divisionnaire: 05075382.1
(73) Titulaire: RHODIA CHIMIE, 92408 Courbevoie Cédex (FR)
(72) Inventeur: BENAYOUN, Jean-Paul, F-69100 Villeurbanne (FR); GUYOT, Christophe, F-69005 Lyon (FR); LIEVRE, André, F-69230 Saint-Genis-Laval (FR); MIROU, Christian, F-69005 Lyon (FR)
(74) Mandataire: Trolliet, Maurice
(86) Numéro de dépôt international: PCT/FR1998/000565
(87) Numéro de publication internationale: WO 1998/042450

(56) Documents cités:
- EP-A- 0 131 883
- EP-A- 0 845 510
- EP-A- 0 845 511
- EP-A- 0 851 001
- EP-A- 0 860 405
- EP-A- 0 866 164
- BE-A- 652 249
- GB-A- 2 051 102
- US-A- 3 928 629
- US-A- 4 745 011

## Description

Le domaine de la présente invention est celui des compositions silicones réticulables par activation, susceptibles d'être utilisées notamment pour former un revêtement ou un film anti-adhérent pour support fibreux ou non, par exemple en papier ou analogue, ou bien encore en polymère naturel ou synthétique.

Plus précisément, l'invention a trait à un procédé d'enduction en continu d'une bande de support défilante, (e.g. papier, tissu, polymère), en vue de lui conférer des propriétés anti-adhérentes, ladite enduction étant réalisée à l'aide d'une composition silicone à base de polyorganosiloxane (POS).

Les POS antiadhérents auxquels on s'intéresse dans le cadre de l'invention sont du type de ceux réticulables, par hydrosilylation ou par déshydrogénopolycondensation, par voie thermique ou par association de la chaleur et de radiations (rayonnement UV ou faisceau d'électrons).

Plus spécifiquement encore, les POS considérés sont par exemple ceux réticulables rapidement (« fast cure ») et à basse température (« Low Temperature Cure »)-POS FC/LTC.

La présente invention concerne également le dispositif et la composition silicone impliquée dans le procédé d'enduction en continu, qui constitue son objet principal.

Classiquement, les compositions silicones anti-adhérentes, comprennent au minimum un POS A, un réticulant B qui est un POS et un catalyseur. Ces compositions ternaires ne peuvent exister que de manière ephémère à l'état non réticulé. En effet, quelque soit le mécanisme de réticulation concerné : hydrosilylation ou déshydrogénopolycondensation, les POS de type SiH mis en présence dans le premier cas de POS de type SiVi et de catalyseur d'hydrosilylation au platine ou mis en présence dans le second cas de POS de type SiOH ou SiOR et de catalyseur de condensation au platine ou à l'étain réticulent à plus ou moins brève échéance. La vitesse de réticulation dépend notamment de la température réactionnelle.

Par ailleurs, il convient de rappeler que les POS constituant ces compositions anti-adhérentes peuvent se présenter, à l'état non réticulé, à l'état pur ou sous forme de solutions ou émulsions liquides réticulables.

Il s'ensuit que pour les traitements anti-adhérents de supports (papier, tissu ou film polymère), qui consistent à enduire la surface de ces supports à l'aide des compositions silicones sus-visées, il est impératif de réaliser l'application et l'étalement desdites compositions lorsqu'elles sont sous forme liquides non réticulées et donc tout à fait propres à se prêter auxdites opérations.

Une fois que les supports sont enduits de composition silicone, on les soumet à un chauffage de manière à accélérer leur réticulation.

Au vu de ce qui précède, on entrevoit donc aisément deux difficultés, parmi d'autres, qui vont se poser dès lors que l'on envisage des traitements d'antiadhérence par enduction silicone e.g. de papier ou de film thermoplastiques, à cadence et à échelle industrielle.

La première difficulté tient au fait que les systèmes silicones (mettant en oeuvre des POS purs, en émulsion ou en phase solvant...) réticulant thermiquement et qui sont habituellement utilisés, nécessitent des températures de réticulation comprises entre 100 et 200° C. Il est clair qu'à ces températures, il est difficile, voire impossible d'envisager l'enduction de certains supports tels que les films thermoplastiques comme le polyéthylène, le polypropylène, le PVC et dans une moindre mesure, le téréphtalate de polyéthylèneglycol. Ces systèmes silicones sont en outre caractérisés par des durées de vie de bain DVB supérieures ou égales à 10 heures et, en pratique, comprises entre 12 et 24 heures.

Par DVB, on désigne le temps nécessaire au doublement de la viscosité dynamique mesurée à 30° C. La viscosité dynamique peut être mesurée à l'aide d'un viscosimètre BROOKFIELD selon les indications de la norme AFNOR NFT 76102 de mai 1982.

Des DVB ≥ 10 heures laissent aux industriels une marge suffisante pour mettre en oeuvre l'enduction silicone à cadence et à échelle industrielle, tout en plaçant les contraintes à un niveau tolérable. Malheureusement la limitation qu'impose les hautes températures de réticulation, en ce qui concerne la variété des supports traitables par enduction silicone anti-adhérente, constitue un handicap majeur.

En outre, ces températures élevées nuisent à la productivité et à la rentabilité des traitements d'enduction, en raison du coût élevé en énergie et en temps nécessaire.

Pour tenter de résoudre ces difficultés, des systèmes silicones sans solvant pour anti-adhérence, réticulables par voie thermiques et revendiquant une performance d'application dénommée LTC (réticulation à basse température) ont été proposés.

Ces sytèmes thermiques silicones réticulent à des températures comprises entre 60 et 110°C. Mais malheureusement, le corollaire de cette diminution avantageuse de température de réticulation, est une chute significative de la DVB qui peut tomber très nettement en dessous de 10 heures.

De telles DVB sont incompatibles avec les contraintes d'utilisation industrielles actuelles, propres au traitement d'antiadhérence silicone par enduction. En effet, la préparation du mélange formant la composition silicone est généralement réalisée en mode discontinu (BATCH). Or, dans ces techniques, l'alimentation de la tête d'enduction à partir de la ou des cuves de préparation du mélange, implique nécessairement des temps de stagnation de la composition liquide silicone, avant son application sur le support. On conçoit donc aisément qu'avec des DVB courtes, des problèmes de gélification et de prise en masse sont susceptibles d'intervenir et de nuire notablement à la qualité de l'enduction.

De plus, le fait d'être contraint de préparer des quantités relativement importantes de BATCH, peut causer de gros préjudices économiques dès lors qu'intervient sur la chaîne d'enduction, un quelconque incident de nature à interrompre le procédé.

En résumé, les procédures industrielles d'enduction silicones ne sont pas complètement adaptées aux compositions silicones anti-adhérentes LTC, qui correspondent à ce que l'on fait de mieux actuellement sur le plan des systèmes silicones réticulables pour l'antiadhérence. Leur inadaptation se traduit en terme de lourdeur méthodologique, de faible productivité et rentabilité, de coût élevé et de moindre qualité des revêtements antiadhérents obtenus.

De manière plus générale, les industriels applicateurs des systèmes silicones anti-adhérents sont dans l'attente d'un procédé d'enduction plus universel en ce qui concerne la gamme des supports susceptibles d'être enduits d'un revêtement obtenu par réticulation thermique ou sous l'effet conjugué de la chaleur et de radiations, c'est-à-dire autorisant des températures de réticulation plus faibles, tout en préservant des durées de vie de bain pour la composition silicone liquide non réticulées, qui soient d'un niveau acceptable et compatible avec les exigences industrielles de production à grande échelle et à haute cadence.

Il est également souhaitable de disposer de compositions silicones réticulables, douées d'une cinétique élevée de réticulation, de façon à réaliser là encore des gains de productivité et de rentabilité.

La problématique à la base de l'invention peut donc se résumer à la mise au point d'un compromis entre les paramètres *température de réticulation*/*cinétique de réticulation*/*durée de vie de bain.*

De manière plus pragmatique, l'objectif à atteindre serait également de développer une technique de mélange astucieuse et optimale, au regard des attentes industrielles en matière d'enduction silicone anti-adhérente à cadence et à échelle industrielle.

Il existe un autre frein à l'optimisation des procédés industriels d'enduction silicone antiadhérente, qui est lié au fait que ces compositions requièrent des dosages très précis et fiables des divers ingrédients. Cela est d'autant plus compliqué, que les rapports entre ces ingrédients sont très importants : POS de base par rapport au réticulant et par rapport au catalyseur.

Confrontés à cette problématique, les inventeurs ont eu le mérite :
- d'une part, de mettre en évidence qu'il convenait de simplifier la gestion des paramètres *température de réticulation*/*cinétique de réticulation*/*DVB,* en s'affranchissant de l'un de ces paramètres, à savoir la DVB,
- et d'autre part, d'avoir mis au point un procédé continu d'enduction faisant intervenir des étapes de dosage, de mélange homogène et d'alimentation de la tête d'enduction sur machine, lequel procédé permettant précisément, de manière surprenante et inattendue, de s'affranchir du paramètre DVB.

Ainsi, la présente invention concerne un procédé d'enduction en continu d'une bande de support défilante en vue de lui conférer des propriétés anti-adhérentes, ladite enduction étant réalisée à l'aide d'une composition silicone comprenant : au moins un polyorganosiloxane A au moins un réticulant B réticulable par hydrosilylation et/ou par déshydrogénopolycondensation et une quantité efficace de catalyseur C,
caractérisé en ce qu'il consiste, essentiellement :
**1. à** mélanger en continu et en quantités dosées, notamment, le ou les POS A porteurs de groupements réactifs GRa, le ou les réticulants B porteurs de groupements réactifs GRb, et le catalyseur C ; en :
   - réalisant éventuellement au moins un prémélange AB et/ou AC et/ou BC quand ce dernier est faisable,
   - choisissant les conditions de mélange de manière que :
      * la Durée de Vie de Bain DVB soit inférieure à 10 H, de préférence à 4 H, et plus préférentiellement encore à 2 H,
      * l'homogénéité du bain soit telle que sa signature par calorimétrie différentielle par balayage DSC comprenne au moins un pic sensiblement gaussien présentant,
         une température T1 de début de pic,
         une température T2 de sommet de pic,
         une température T3 de fin de pic,
         ce pic étant caractérisé par :
         - i - T3 ≤ 110° C, de préférence ≤ 90° C, et plus préférentiellement encore ≤ 80° C,
         - ii - ΔT = T3 - T1 ≤ 30°C, de préférence ≤ 20° C et plus préférentiellement encore ≤ 15° C, T3 pouvant éventuellement ne pas satisfaire au paramètre -i- ci-dessus,
         et
         - iii - ΔT = ΔT ref ± 10° C,
            de préférence = ΔT ref ± 8° C,
            et plus préférentiellement = ΔT ref ± 4° C,
            ΔT ref correspondant à T3ref - T1ref, obtenu à partir du pic de signature DSC d'un mélange ABC de référence réalisé selon le protocole Pr défini ci-après dans le présent mémoire,
      * le débit de production du mélange homogène soit compris entre une valeur correspondant au taux de consommation du mélange sur le (ou les) site(s) d'enduction et une valeur déterminant la constitution d'une réserve-tampon,
         cette valeur du débit étant telle que la durée d séparant la mise en présence des composants A, B et C et le moment d'application de la composition ABC sur la bande support défilante soit inférieure ou égale à la DVB,
**2.** à acheminer, simultanément ou non, la composition directement du mélangeur vers le (ou les) site(s) d'enduction,
**3.** à enduire la bande-support défilante avec la composition,
**4.** à permettre à la réticulation thermique de se produire.

L'analyse par DSC (« Differential Scanning Calorimetry ») est réalisée, de manière connue en soi, à l'aide d'un appareil METLER type TA 4000 en utilisant les paramètres de fonctionnement suivants : vitesse de montée en température : 10,0° C/min ; masse de la prise d'essai : 15 mg ; travail dans un creuset ouvert en aluminium.

L'un des principes essentiels gouvernant la présente invention tient à la combinaison d'une procédure de dosage précis et de mélange homogène des composés selon la composition silicone anti-adhérente d'enduction, en mettant en oeuvre des moyens appropriés et en prenant le parti d'agir sur des paramètres judicieusement sélectionnés.

Ces paramètres sont :
- la durée de vie de bain que l'on abaisse en deçà de 10 heures en jouant sur la nature et/ou les proportions des composants A, B, C et/ou de leurs possibles prémélanges,
- l'homogénéité du mélange que l'on maîtrise au travers de la signature DSC, qui permet un étalonnage par rapport à un mélange de référence,
- et le débit de production de mélange homogène que l'on ajuste au taux de consommation avec ou sans formation de réserve tampon d'enduction.

Le mélange ainsi dosé et homogénéisé est directement envoyé sur la tête d'enduction de la machine, de sorte que seule la quantité de mélange nécessaire à alimenter la tête d'enduction (par exemple avec une réserve tampon de 10 à 30 min de consommation) est préparée.

Les avantages du procédé selon l'invention sont nombreux. On peut citer notamment :
- diminution de la température de réticulation des mélanges utilisés, d'où la possibilité d'enduire et de faire réticuler thermiquement des supports thermosensibles tels que par exemple les films PE, PP, PVC, PET ,
- possibilité de travailler avec des systèmes silicones dont la DVB est inférieure à 10 h et pour descendre à des valeurs aussi basses que celles inférieures à 2 H,
- préparation en continu de la quantité minimale de mélange nécessaire pour l'alimentation de la tête d'enduction, d'où réduction des pertes en cas d'incident interrompant le traitement d'enduction,
- fiabilité et précision du dosage des composants dans des rapports pouvant descendre jusqu'à 1 : 100 ou en dessous de 1 : 100 et cela même lorsqu'on opère avec de faibles débits ; la précision pouvant être de l'ordre de 2 %, d'où une régularité accrue de la qualité des produits finis,
- élimination des risques d'erreur de dosage provenant des méthodologies de préparation de mélange en BATCH par pesée manuelle,
- élimination des risques de pollution par des gels provenant des systèmes automatiques de préparation des mélanges en BATCH,
- amélioration de la productivité : diminution de temps de main d'oeuvre et des pertes matière,
- simplification du flux des matières premières silicones,
- facilité de préparation du mélange : moins de manutention et de travaux pénibles, donc risque d'incidents réduit,
- souplesse d'utilisation dans le changement de rapport de dosage et rapidité de mise en oeuvre sur machine : moins de perte de matière, rapidité dans les changements de fabrication,
- gain de temps d'opérateur sur machine pour des tâches non productives.

Il est du mérite des inventeurs d'avoir mis au point une méthodologie d'enduction en continu, permettant d'utiliser industriellement des systèmes silicones thermiques réticulant (polyaddition ou déshydrogénopolycondensation) à d'aussi basses températures et avec des DVB aussi courtes que celles inférieures à 10 heures.

Cette innovation nécessite à la fois l'expertise de la chimie des silicones et une maîtrise des technologies de dosage précis dans des rapports e.g. de l'ordre de 1 : 100 et de mélange intime en continu de produits plus ou moins visqueux pouvant être utilisés à faible débit.

Par ailleurs, ce procédé présente un intérêt pour la mise en oeuvre de tous les systèmes silicones sans solvant, avec solvant, ou du type émulsion, réticulable par voie thermique (polyaddition ou déshydrogénopolycondensation) associée éventuellement à un rayonnement, destiné à l'enduction en couche mince de revêtement anti-adhérent sur tout support : papier, polymère ou textile.

Avantageusement, le protocole Pr permettant d'établir le mélange de référence ABC pour parvenir au paramètre comparatif ΔTref des pics DSC du mélange, consiste à mélanger les mêmes constituants A, B, C dans les mêmes proportions en vue de réaliser dans un récipient, un mélange de 250 cm³, sous agitation modérée à l'aide d'une agitation à hélice tournant à 1000 tours/min pendant au moins 15 min, à température ambiante (25° C).

En pratique, la réserve-tampon peut être déterminée par les deux cylindres accolés, entrainables en rotation en sens opposé et constituant la tête d'enduction. Cette réserve est par exemple, comprise entre 10 et 30 min de consommation de la composition servant à faire l'enduction.

Le taux de consommation à l'enduction dépend de la vitesse de défilement de la bande support, de la largeur et de la nature de cette dernière (pouvoir absorbant), ainsi que de la viscosité de la composition silicone réticulable et de l'importance du dépôt (g/m²) souhaité.

Conformément à l'étape 2 du procédé, l'acheminement de la composition au moins partiellement mélangée, vers la tête d'enduction s'effectue de manière simultanée ou non, dans la mesure où il est possible d'envisager la mise en oeuvre de moyens de mélange statique ou dynamique, parcourus par un flux de matière, ledit flux étant produit par des moyens d'alimentation ou d'acheminement, comme par exemple des pompes, et en particulier des pompes volumétriques, ou des conteneurs de stockage sous pression.

Suivant une disposition préférée de l'invention relative à l'étape 1, on met en oeuvre des conditions de mélange A, B, C telles que l'homogénéité obtenue se traduise par un pic DSC dans lequel les paramètres (i), (ii) et (3i) sont cumulativement satisfaits.

Cela correspond à un système silicone LTC/FC, sachant que de tels systèmes s'ils sont préférés conformément à l'invention, n'en sont pas pour autant exclusifs d'autres systèmes silicones réticulant à plus haute température et/ou un peu moins rapidement.

Pour parfaire les conditions d'enduction, on fait en sorte que la viscosité dynamique à 25°C, du mélange homogène est inférieure ou égale à 10 000 mPa.s, de préférence inférieure ou égale à 1000 mPa.s.

Conformément à un mode préféré de mise en oeuvre de l'invention, le procédé d'enduction en continu comprend une étape 0 préalable consistant :
→ à prémélanger A et B et/ou A et C et/ou B et C lorsque c'est faisable,
→ et/ou à mettre en oeuvre un prémélange AB.

A, B, C sont les composés de base de la composition propre au procédé selon l'invention. Mais en réalité, il est préférable de leur adjoindre d'autres ingrédients, en adoptant ou non les variantes méthodologiques consistant à réaliser des prémélanges de ces ingrédients supplémentaires avec des composés A, B, C. Ainsi, on peut incorporer avantageusement :
- à au moins l'un des composés de départ A, B, et C
- et/ou au prémélange AB et/ou AC et/ou BC lorsque ce dernier est faisable,
- ou dans le bain contenant les composés A,B et C,
   → au moins un inhibiteur D de réticulation (c'est en particulier le cas lorsque l'on met en oeuvre des systèmes silicones réticulant par hydrosilylation),
   → et/ou au moins un modulateur d'adhérence E,
   → et/ou au moins un autre composant F.

Il doit être entendu que :
· lorsque la composition selon le procédé de l'invention renferme, à côté des composés A, B et C, les ingrédients optionnels D et/ou E et/ou F,
· l'analyse par DSC ainsi que le protocole Pr, dont on a parlé ci-avant, vont concerner alors le mélange constitué de A, B, C et de D et/ou E et/ou F.

Selon un mode plus préféré encore de mise en oeuvre de l'invention, on fait en sorte que l'étape 1 se décompose comme suit :
- 1' - prémélange (étape 0) des composés A, B + éventuellement D et/ou E et/ou F ;
- 1 " - puis mélange homogène du prémélange (e.g. AB, ABD, ABDE, ABDEF, ABE, ABF, ABDF, ABEF) avec le composé C.

Sans que cela ne soit limitatif, le POS A est, de préférence, sélectionné ;
dans le groupe comprenant :
- les POS qui présentent, par molécule, au moins deux groupes GRa, situés dans la chaîne et/ou en bout(s) de chaîne, consistant chacun dans un groupe alcényle en C₂-C₁₀ lié au silicium, de préférence vinyle,
- et leurs mélanges,
tandis que le réticulant B consiste dans au moins un POS présentant, par molécule, au moins deux et, de préférence, au moins trois groupes GRb consistant chacun en un atome d'hydrogène lié au silicium, situés dans la chaîne et/ou en bout(s) de chaîne ;
A réagissant avec B par hydrosilylation.

Pour de tels composés A et B, il a pu être mis en évidence que le rapport molaire GRb : GRa devait se situer avantageusement dans l'intervalle allant de 1 à 5, de préférence 1,1 à 3 et plus préférentiellement encore 1,5 à 2,5.

Il s'agit là du cadre dans lequel l'homme du métier est à même de trouver les rations molaires idoines pour respecter les paramètres opératoires de l'invention, telle que définie ci-dessus et à les appliquer au cas des composés A et B réticulables par hydrosilylation.

Des exemples de POS A sont les (diméthyl)polysiloxanes à extrémités diméthylvinylsilyle, les copolymères (méthylvinyl)(diméthyl)polysiloxanes à extrémités triméthylsilyle, les copolymères (méthylvinyl)(diméthyl)polysiloxanes à extrémités diméthylvinylsilyle, les (méthylvinyl)polysiloxanes cycliques.

Des exemples de réticulant B sont les (diméthyl)polysiloxanes à extrémités diméthylhydrogénosilyle, les (méthylhydrogéno)polysiloxanes à extrémités triméthylsilyle, les copolymères (diméthy)-(méthylhydrogéno)-polysiloxanes à extrémités triméthylsilyle, les (méthylhydrogéno)polysiloxanes cycliques, les résines M'Q constituées des motifs (CH₃)₂HSiO_{1/2} et SiO₂

Les bases de composition silicone polyaddition peuvent comporter uniquement des POS linéaires comme par exemple celle décrite dans les brevets US N° 3 229 172, 3 697 473, 4 340 709 ou bien encore comporter du POS ramifié ou en réseau comme par exemple celle décrite dans les brevets US N° 3 284 406, 3 434 366.

Selon une variante, le POS A est sélectionné parmi :
- les polydiorganosiloxanes portant au moins deux groupes GRa condensables ou hydrolysables, situés dans la chaîne et/ou en bout(s) de chaîne, consistant chacun dans un groupe OR lié au silicium ou R est un atome d'hydrogène ou un radical alkyle en C₁-C₆.
- et leurs mélanges ;
tandis que le réticulant B est du type POS B porteur de GRb = H ;
A réagissant avec B par déshydrogénopolycondensation ;
et en ce que le ratio molaire GRb : GRa se situe dans l'intervalle allant de 1 à 5, de préférence 1 à 3.

Des exemples de POS A réticulables par déshydrogénopolycondensation sont les (diméthyl)polysiloxanes à extrémités hydroxydiméthylsilyle ou à extrémités alkoxydiméthylsilyle ou dialkoxyméthylsilyle avec alkoxy étant méthyloxy, éthyloxy ou propyloxy.

Les POS susceptibles de constituer les composés A et B des systèmes de réticulation par déshydrogénopolycondensation peuvent présenter là aussi une structure linéaire, éventuellement ramifiée, cyclique ou en réseau.

S'agissant de la quantité efficace de catalyseur C par rapport aux autres composants A et B, on entend une concentration en C nécessaire et suffisante pour permettre la réticulation selon la cinétique requise par la méthodologie selon l'invention et pour atteindre les caractéristiques d'usage, attendues dans l'application revêtement anti-adhérent.

Dans le cas d'un système silicone réticulant par hydrosilylation, tous les catalyseurs d'hydrosilylation classiques peuvent être mis en oeuvre dans le procédé selon l'invention. On privilégie en particulier les catalyseurs à base de platine dont notamment les catalyseurs de type Karstedt. Ainsi, le catalyseur C de polyaddition est choisi de préférence parmi les composés du platine et du rodium. On peut en particulier utiliser les complexes (Karstedt) du platine et d'un produit organique décrit dans les brevets US N° 3 159 601, 3 159 602, 3 220 972 et les brevets européens EP N° 0 057 459, EP 0 188 978 et EP 0 190 530, ou bien les complexes (Karstedt) du platine et d'organositoxanes vinylés décrits dans les brevets US N° 3 419 593, 3 715 334, 3 377 432 et 3 814 730.

Pour fixer les idées, on peut indiquer qu'il est préférable que la quantité ou la concentration de C soit comprise entre 10 et 250 ppm de catalyseur pris à l'état métallique, de préférence de 30 à 200 ppm et plus préférentiellement encore de 50 à 150 ppm, par rapport aux quantités de composés A et éventuellement D et/ou E, mises en oeuvre.

Les catalyseurs C mis en oeuvre dans le type de réticulation par déshydrogénopolycondensation sont soit des catalyseurs à base de platine tels que ceux mentionnés ci-avant, soit les catalyseurs classiques de condensation composés d'au moins un métal appartenant au groupe de l'étain, ce dernier métal étant particulièrement préféré. Il peut s'agir par exemple de dilaurate, de dibutyl étain.

Le catalyseur C, quand il est à base de platine, est mis en oeuvre dans les proportions indiquées ci-avant, quand il est à base d'étain, sa quantité, exprimée en ppm d'étain métal par rapport aux quantités de composés A et éventuellement D et/ou E, est comprise entre 1000 et 5000 et, de préférence, entre 2000 et 4000.

Dans la variante préférée de l'invention, selon laquelle on fait intervenir un inhibiteur D dans un système où la réticulation entre A et B intervient au moins en partie selon un mécanisme d'hydrosilylation, on privilégie les inhibiteurs D choisis dans le groupe comprenant : les alcools α-acétyléniques, les azodicarboxylates, les esters maléiques, et leurs mélanges, le triméthyl-3,7,11-dodécyne-1ol-3 (TMDDO) et l'éthynyl-cyclohexanol (ECH) étant préférés.

Comme exemple d'inhibiteur D de réaction d'hydrosilylation, susceptible d'être employé, on peut citer ceux décrits dans la demande de brevet français N° 2 704 553 relative aux alcools α-acétyléniques à longue chaîne. Le contenu de cette demande de brevet est d'ailleurs intégralement incorporé au présent exposé par référence.

S'agissant des inhibiteurs D du type azodicarboxylate, on se référera à la demande de brevet européen N° 0 184 965 qui décrit en détail de tels inhibiteurs de réaction de réticulation par polyaddition. Le contenu de cette demande de brevet est lui aussi inclu entièrement dans la présente demande par référence. A titre d'exemples de composés inhibiteurs du type azodicarboxylates, on peut citer l'azodicarboxylate d'éthyle.

S'agissant des inhibiteurs D du type ester maléique, on se référera à la demande de brevet français N° 2 456 767 qui décrit en détail de tels inhibiteurs. Le contenu de cette demande de brevet est lui aussi inclu entièrement dans la présente demande par référence. A titre d'exemple de composé inhibiteurs de ce type, on peut citer le maléate de di-n-butyle, le maléate de diallyle.

S'agissant d'un autre composé facultatif de la composition silicone propre au procédé de l'invention, à savoir le modulateur d'adhérence E, il est de préférence sélectionné dans le groupe de composés formé par :
- les résines POS modulateurs à fonction Si alcényle qui sont décrites dans le demande de brevet français N° 2 704 553 (résines dites dans ce document , RM « Si alcényle ») ;
- les résines POS modulateurs à fonction SiH qui sont décrites dans la demande de brevet français N° 2 704 553 (résines dites dans ce document, RM « SiH ») ;
- les résines POS modulateur à fonction Si-OH, constituée d'au moins deux types de motifs siloxy différents « M » (R₃SiO_{1/2}), « Q » (SiO₂) et/ou « T » (RSiO_{3/2}) et éventuellement « D » (R₂SiO_{2/2}), les radicaux organiques étant identiques ou différents et représentant des groupes alkyle ou cycloalkyle en C₁-C₁₈ ou phényle, au moins 80 % molaire des radicaux organiques représentant un groupe méthyle, ladite résine contenant au moins 0,1 % molaire, de préférence de 0,5 à 5 % molaire de groupes hydroxyles liés au silicium avec un rapport nombre de motifs « M »/nombre de motifs « Q » et/ou « T » de 0,6-1, le nombre de motifs « D » éventuels étant de 0,5-10 pour 100 moles de résine ;
- les mélanges de deux ou de plus de deux des résines précitées entre elles ;
- les mélanges d'au moins une des résines précitées avec les solvants dits « réactifs » qui sont décrits dans la demande de brevet français N° 2 704 553. (étant rappelé que le contenu de cette demande de brevet N° 2 704 553 est inclus entièrement dans la présente demande par référence).

Commes exemples de résines entrant dans la constitution du modulateur d'adhérence E selon la présente invention, on citera les résines :
- MD^{Vi}Q où les groupes vinyles sont inclus dans les motifs D,
- MM ^{Vi}Q où les groupes vinyles sont inclus dans une partie des motifs M,
- MD'Q où les atomes d'hydrogène liés au silicium sont inclus dans les motifs D,
- MM'Q où les atomes d'hydrogène liés au silicium sont inclus dans une partie des motifs M,
- MQ(OH) où les groupes hydroxyle liés au silicium sont inclus dans les motifs M.

Comme déjà indiqué ci-dessus, le mélange préparé conformément au procédé de l'invention peut comprendre avantageusement au moins un autre composant F constitué :
(i) par un solvant organique aliphatique et/ou aromatique ne participant pas à la réaction, ce solvant étant de préférence celui dans lequel A et/ou B sont dissous pour constituer une solution qui représente la forme sous laquelle A et/ou B sont mis en oeuvre dans le procédé ;
(2i) et/ou par de l'eau dans le cas de la mise en oeuvre d'un système en émulsion.

Suivant une caractéristique préférée de l'invention, la concentration en inhibiteur D est inférieure ou égale à 0,5 % en poids, de préférence à 0,2 % en poids et plus préférentiellement encore à 0,15 % en poids, par rapport à la quantité de composés A et éventuellement E.

La possibilité d'employer d'aussi faibles concentrations en inhibiteur D est un grand avantage notamment sur le plan économique. Cet avantage est bien évidemment inhérent au procédé en continu selon l'invention.

La présence d'un additif supplémentaire du type solvant organique, ne participant pas à la réaction, de préférence aliphatique ou aromatique, est à mettre en relation avec la possibilité qu'offre l'invention de mettre en oeuvre les composés de départ sous forme de solution. En effet, les résines POS A ou B, voire même les composés C, D et E peuvent être alimentés dosés, mélangés et acheminés vers la tête d'enduction, sous forme de solution.

Selon une alternative, les composés A, B, C, D, E peuvent être employés sous forme d'émulsion.

Conformément à une disposition intéressante de l'invention, on fait en sorte que l'admission en quantités dosées des constituants A, B, C éventuellement D et/ou E et/ou F, au niveau du ou des éventuels sites de prémélange et/ou du ou des sites de mélange de C avec les autres composants, s'effectue de manière séquencée et itérative.

Ainsi, dans le cas où il s'agit, par exemple, conformément à une étape 1' préalable, d'un prémélange des composés A, B, D, on prévoit que l'alimentation des circuits avec ces 3 composés, s'opère de manière successive selon par exemple A/B/D, ou AD/B/A, répétée tout au long du fonctionnement en continu du procédé.

Selon une autre caractéristique de l'invention, les opérations de mélange et éventuellement de prémélange se subdivisent en une étape de mélange amont et une étape de mélange aval.

L'étape de mélange amont correspond à une mise en contact de tout ou partie des composés tandis que l'étape de mélange aval constitue, en fait, une opération de mélange intime et homogène des susdits composés avec ajout éventuel du (ou des) composé(s) manquant(s).

En pratique, l'organisation du flux de matière selon des séquences répétées de plusieurs strates de chaque composé par exemple A, B, D ou A, B, D, C trouve avantageusement sa place en amont du ou des sites de prémélange ou de mélange aval.

Comme déjà précisé ci-avant, l'un des éléments clés du procédé de l'invention tient au dosage en continu des composés de la composition. Pour mener à bien cette opération, on a recours de manière privilégiée pour chaque constituant A, B, C, éventuellement D et/ou E et/ou F de la composition, à des moyens de dosage notamment volumétrique apte à assurer l'alimentation en quantité dosée de chacun d'eux ainsi que, au moins partiellement, leur circulation selon un flux continu, tout au long de la chaîne opératoire.

S'agissant des opérations de mélange voire d'éventuels pré-mélanges, on a avantageusement recours à des moyens de mélange statique ou dynamique.

Les inventeurs ont sélectionné, outre les paramètres principaux de ce procédé évoqué ci-dessus, d'autres paramètres dont il est judicieux de tenir compte pour garantir un bon déroulement du procédé. Ainsi, avantageusement, les paramètres à considérer également pour le prémélange et/ou le mélange sont :
· la vitesse de défilement de la bande-support,
· le taux de consommation de la composition à l'enduction,
· la durée de vie de bain DVB,
· les débits d'alimentation des constituants A à F au niveau des sites de mélange voire de prémélange,
· les débits en sortie de mélange voire de prémélange,
· la vitesse du flux de mélange voire du flux du prémélange,
· la durée séparant la mise en présence de C avec les constituants nécessaires à la réaction et le dépôt du mélange sur la bande-support.

Selon un autre de ces aspects, la présente invention concerne un dispositif notamment pour la mise en oeuvre du procédé tel que défini supra. Ce dispositif est caractérisé en ce qu'il comprend :
· des moyens de dosage notamment volumétrique des composants A, B, C, éventuellement D et/ou E et/ou F,
· d'éventuels moyens de prémélange des composants autre que C,
· des moyens de mélange homogène des composants A, B, C, éventuellement D et/ou E et/ou F,
· au moins un organe d'enduction de la bande support défilante,
· des moyens d'acheminement du mélange homogène du ou des sites (moyens) de mélange vers l'organe d'enduction, et éventuellement du ou des sites (moyens) de prémélange vers les moyens de mélange,
· et des moyens de chauffage de la bande-support enduite, ces moyens étant de préférence constitués par au moins un four-tunnel.

Avantageusement, les éventuels moyens de prémélange comprennent au moins une chambre de prémélange amont et des moyens de prémélange statique aval, et les moyens de mélange homogène comprennent au moins une chambre de mélange amont et des moyens de mélange statique aval.

Comme organe d'enduction, on peut utiliser tous les systèmes capables d'enduire en couche mince ; on citera par exemple les systèmes : « size press », lame d'air, barre de Meyer, tête « direct gravure », tête « multicylindres ». Avantageusement, l'organe d'enduction est constituée une tête « direct gravure » (ou à cylindre gravé) ou par une tête « multicylindres », organes qui sont très répandus dans l'industrie du papier.

La structure et le fonctionnement de ce dispositif seront mieux compris à la lumière de la description qui suit, à titre d'exemple non limitatif, d'un mode de réalisation préféré dudit dispositif ainsi que d'exemples de mise en oeuvre du procédé d'enduction en continu selon l'invention, à l'aide dudit dispositif.

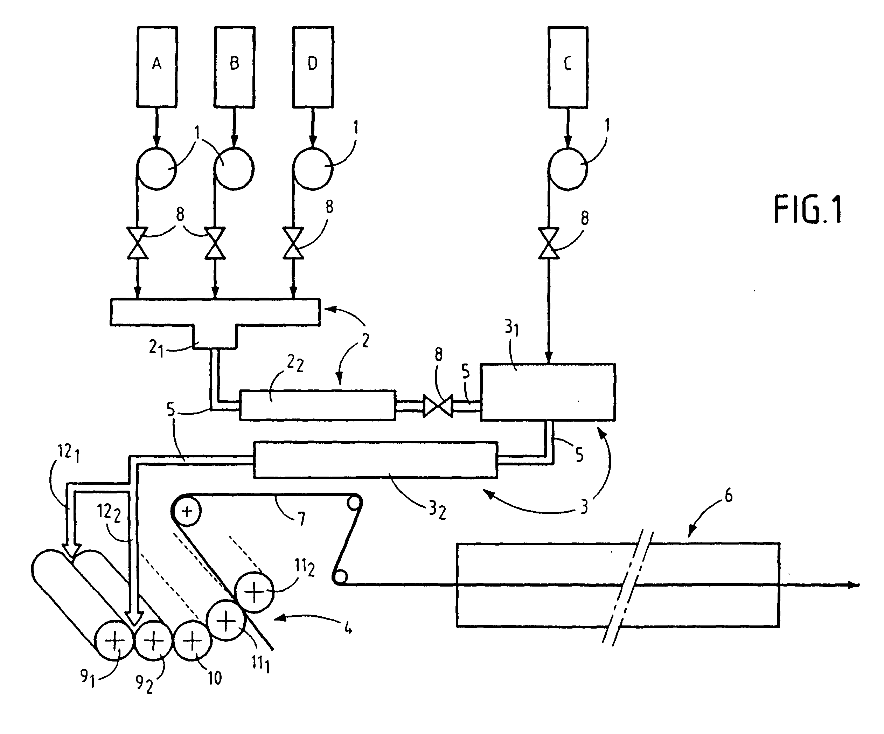

La description du dispositif se fait en référence à la **fig.1** annexée qui représente un schéma synoptique du mode préféré de réalisation du dispositif suivant l'invention.

Ce dernier comprend des moyens **1** de dosage volumétrique des composés A, B, D et C qui sont respectivement un POS, un agent réticulant, un inhibiteur et un catalyseur par exemple au platine ou à l'étain selon que les systèmes soient du type polyaddition ou déshydrogénopolycondensation.

Le dispositif comporte également des moyens **2** de prémélange des composants autres que C, des moyens **3** de mélange homogène des constituants A, B, D, C, un organe d'enduction **4,** des moyens d'acheminement **5** du prémélange et du mélange homogène des sites de prémélange et de mélange respectivement vers l'organe **4** d'enduction, et des moyens de chauffage **6** de la bande support **7** défilante.

Des moyens de dosage **1** sont, par exemple, des compteurs volumiques, c'est-à-dire des éléments mécaniques à engrenage, permettant la mesure précise d'un volume de produit. Chaque compteur volumique **1** est disposé entre une source d'alimentation en composés A, B, D ou C et les moyens **2** de prémélange, pour ce qui concerne les constituants A, B, D, et les moyens **3** de mélange homogène, pour ce qui concerne le catalyseur C.

Chaque compteur volumique **1** se comporte comme une pompe doseuse qui prélève la quantité idoine de composés pour l'injecter dans le circuit de mélange. Une électrovanne **8** est prévue sur la connexion reliant chaque compteur volumique **1** aux moyens **2** et **3** de prémélange et de mélange respectivement.

Ces derniers comprennent respectivement une chambre de prémélange amont **2.1** et de mélange amont **3.1** reliés chacune par une canalisation **5** formant les moyens d'acheminement, à une chambre de prémélange statique aval **2.2** et à une chambre de mélange statique aval **3.2,** respectivement.

Les chambres amont **2.1** et aval **2.2** permettent le prémélange des composés A, B, D tandis que les chambres amont **3.1** et aval **3.2** permettent le mélange homogène et intime du prémélange A, B, D avec le catalyseur C.

Chaque chambre amont **2.1** et **3.1** est un organe : (i) de mélange statique connu en soi, constitué, par exemple, par un cylindre comprenant des canaux toriques, coaxiaux, et (2i) de transit des matières introduites. Chaque canal peut être équipé de palettes statiques de brassage. Un tel organe permet d'assurer la première mise en contact des produits.

Les chambres aval **2.2** et **3.2** sont, e.g. des mélangeurs statiques d'un type connu en soi constitué par un cylindre creux, pourvu à l'intérieur de stators (palettes) de mélange et au travers duquel, la composition silicone A, B, D ou A, B, D, C est susceptible de migrer tout en étant brassée et mélangée, de manière homogène et intime.

Une électrovanne **8** est prévue sur la canalisation **5** entre la chambre aval **2.2** et la chambre amont **3.1.**

Les mélangeurs statiques mis en oeuvre dans ce dispositif sont agencés en ligne dans les moyens d'acheminement **5** (canalisation) constitué, par exemple, par un flexible.

Avantageusement, l'organe d'enduction **4** est une tête « multicylindres » constituée par deux cylindres lisses **9.1** et **9.2** définissant la tête d'enduction en regard de laquelle débouche l'extrémité des moyens d'acheminement **5.** Les cylindres **9.1** et **9.2** sont accolés et sont entrainables en rotation selon des sens opposés. L'organe **4** comprend également un cylindre relais **10** accolé à la paire de cylindres **9.1** et **9.2** et assurant la liaison de celle-ci avec une paire de cylindres **11.1** et **11.2**, dans l'entrefer desquels circule la bande support **7** pour y être éventuellement enduite de composition silicone A, B, D, C réticulante. Cet organe d'enduction **4** est connu en soi.

Selon une caractéristique préférée de l'invention, l'extrémité des moyens 5 d'acheminement du mélange intime, se subdivise en deux branches **12.1** et **12.2** qui permettent d'assurer une alimentation en deux points des cylindres doseurs **9.1** et **9.2,** avec le mélange homogène intime A, B, D, C réticulants. De préférence, chacun de ces deux points d'alimentation est disposé au voisinage d'une extrémité de la tête d'injection **9.1/9.2.** Selon des variantes, il pourrait être prévu plusieurs points d'injection disposés tout au long de l'entrefer des cylindres doseurs **9.1** et **9.2**.

Ces derniers définissent une réserve tampon de composition mélangée intimement et de façon homogène A, B, D, C. Grâce au cylindre **10** et à la presse **11.1/11.2,** cette composition est transférée et appliquée sur la bande support **7,** qui défile à une vitesse donnée dans le sens indiqué par les flèches sur le dessin. Cette bande enduite sur une face traverse ensuite les moyens de chauffage **6** qui sont avantageusement un Four-tunnel, du type de ceux connu dans le domaine technique considéré.

Les compteurs volumiques **1,** les électrovannes **8,** l'organe d'enduction **4,** la bande défilante **7,** et le four-tunnel **6,** peuvent être asservis à une unité centrale de commande et de calcul, permettant la programmation des paramètres opératoires de dosage, de débit, de taux de consommation en bain réactif et de température de réticulation, entre autres.

Selon des variantes de l'invention, il pourrait être prévu en complément des moyens thermiques de réticulation, d'autres moyens d'activation de la réticulation, par exemple irradiation actinique ou faisceau d'électrons.

A titre d'exemple non limitatif de moyens de dosage et de mélange en continu susceptible d'être utilisés dans le dispositif selon l'invention, on peut citer ceux décrits dans la demande de brevet français N° 2 508 635 et dans le modèle d'utilité allemand N° 296 06 710 (DOPAG).

### EXEMPLES

### EXEMPLE 1 : ESSAIS D'ENDUCTION EN CONTINU D'UNE COMPOSITION SILICONE ANTI-ADHERENTE RETICULABLE THERMIQUEMENT PAR HYDROSILYLATION D'UN POS A GROUPEMENT REACTIF GRa = SI-VI, A L'AIDE D'UN POS A GROUPEMENT REACTIF GRb = SI-H

### 1.1. Matériel et matières premières

Le dispositif mis en oeuvre est celui représenté à la **Figure 1** et décrit supra. Plus précisément, on a recours dans cet exemple à un appareil de dosage et de mélange en continu du type VOLUMIX® commercialisé par la Société DOPAG.

L'organe d'enduction est constitué par une tête d'enduction cinq cylindres.

Le four tunnel présente les caractéristiques suivantes : soufflage d'air chaud par buse sur la face enduite suivant 3 zones de 2 mètres de long chacune, avec un débit d'air de 1800 m³ par heure et par zone.

Les composés A, B, D, C mis en oeuvre sont les suivants :
- prémélange composés A et D : POS A formé par une huile consistant dans un copolymère (méthylvinyl)(diméthyl)polysiloxane à extrémités diméthylvinylsilyle contenant 0,031 mole de vinyle/100 g, cette huile étant chargée à hauteur de 0,15 % en poids d'inhibiteur D constitué par un alcool α-acétylénique : le triméthyl 3-7-11 dodécyne-1ol-3 (TMDDO) ;
- composé A : il s'agit de l'huile POS vinylée mise en oeuvre pour préparer le prémélange AD ;
- réticulant B : mélange comprenant 70 % en poids de POS du type (méthylhydrogéno)polysiloxanes à extrémités triméthylsilyle et de 30 % en poids de résine M'Q constituée de motifs (CH₃)₂ HSiO_{1/2} et SiO₂, ledit mélange contenant 1,35 moles de fonctions SiH pour 100 g ;
- catalyseur C : catalyseur au platine du type Karsdedt constitué par une solution à 2000 ppm de platine métal dans une huile polydiméthyl-siloxane à extrémités diméthylvinylsilyle ; ladite solution contenant 0,041 mole de vinyle/100 g.

Le dispositif comprend donc 4 sources d'alimentation en constituant de la composition, à savoir : prémélange AD, POS B, POS A, et catalyseur C.

### 1.2 Calibration des compteurs volumiques :

Les compteurs volumiques **1** affectés aux sources d'alimentation AD, B et A d'une part et la source d'alimentation en catalyseur C, d'autre part, sont réglées de telle sorte que les proportions mises en oeuvre sont les suivantes :
(AD + B + A) : C → 100 parties poids : 6 parties poids ; soit 120 ppm de Pt par rapport à A + D.

De la même façon les compteurs volumiques **1** correspondant à AD, B et A sont réglés de telle sorte que les proportions entre ces constituants soient les suivantes :
AD : A → 66 parties en poids : 33 parties poids,
(AD + A) : B → 100 parties poids : 4,5 parties poids.

Avec ces proportions : le rapport molaire SiH : SiVinyle est égal à 1,8 ; la quantité d'inhibiteur D est égale à 0,10 % par rapport à la masse totale de A.

On trouve encore que la DVB du mélange est seulement de 35 min.

### 1.3. Autres paramétrages

On fixe également les paramètres suivants comme indiqué ci-après :
Débit de sortie du mélangeur : 51 g/min ;
Capacité de la réserve tampon de l'organe d'enduction : 200g ;
Taux de consommation de la composition réticulante : 3 kg /heure ;
Vitesse de défilement de la bande : 150 mètres/min ;
Gradiant de température dans le four tunnel : 1ère zone : 110° C, 2ème zone : 100° C et 3ème zone : 100° C.

### 1.4. Fonctionnement

Le dispositif est mis en fonctionnement et la tête d'enduction 5 cylindres est alimentée en continu pendant 3 heures avec le mélange de produits AD, B, A et C. Le papier enduit à l'aide de cet organe d'enduction est un papier de type glassine. Le dépôt est réalisé à raison de 1 g/m2. Il est réticulé en ligne par passage dans un four tunnel, à une température de l'ordre de 100° C, la vitesse de défilement étant de 150 m/min.

Ce fonctionnement en continu s'est effectué sans problème notable. En particulier pas de gélification. La qualité du revêtement anti-adhérent obtenue est tout à fait satisfaisante.

L'alimentation en composés AD, B et A est assurée par les compteurs volumiques et/ou par une pompe par exemple pneumatique et/ou en prévoyant la mise sous pression des réservoirs constituant les sources d'alimentation des divers constituants.

Le réglage de l'ouverture des éléctrovannes **8** est programmé de telle sorte que l'alimentation des moyens de prémélange **2** et de mélange **3,** se fasse selon des séquences itératives AD/B/A d'une part et ADB/C d'autre part respectivement.

La programmation de l'unité de commande intègre bien évidemment les variables ou les paramètres de réglage des compteurs volumiques et des électrovannes.

### 1.5. Evaluation du procédé

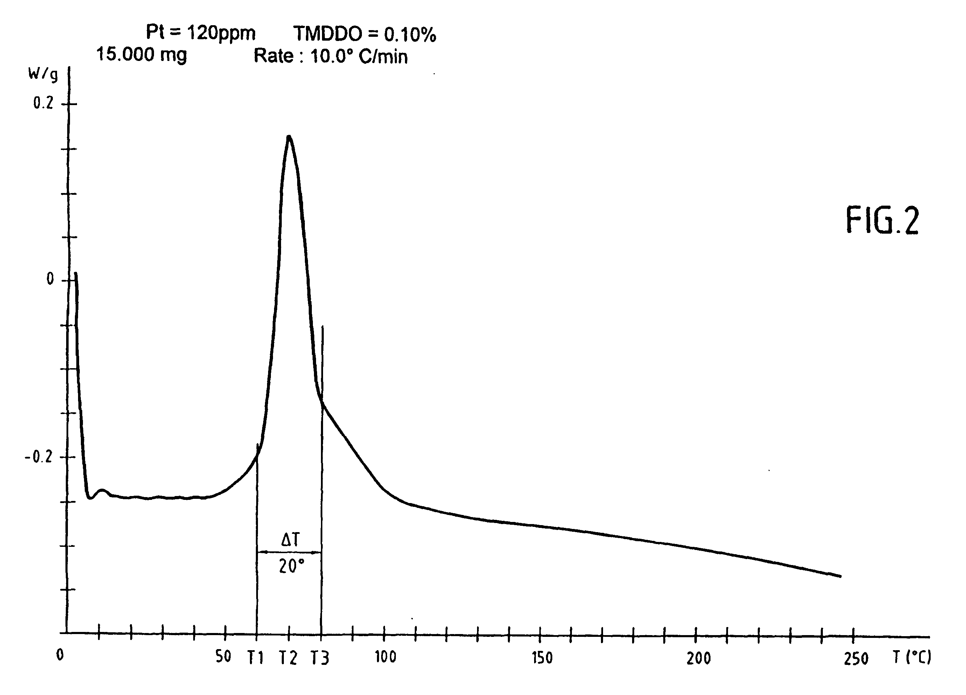

La caractérisation du mélange homogène obtenu à partir des ingrédients A, B, D, C est effectuée par analyse thermique différentielle DSC à l'aide d'un appareil METLER type TA 4000 : la courbe donnée à la Figure 2 permet d'accéder aux valeurs suivantes (données également par l'appareil) :
. Température T1 de début de pic : 60,5° C,
. Température T2 de sommet de pic : 70,3° C,
. Température T3 de fin de pic : 80,4° C,
. Δ T = T3-T1 : 19,9° C.

On trouve également :
. Δ T réf = 18,7° C.
. Δ T = ΔT réf + 1,2° C.

On apprécie aussi la qualité visuelle du mélange obtenu à partir des ingrédients A, B, D, C en ayant pris soin de colorer initialement le catalyseur C. On observe que le résultat obtenu est satisfaisant puisque la coloration du mélange est homogène.

### EXEMPLE 2 : ESSAIS A DIFFERENTES CONCENTRATIONS EN INHIBITEUR D

Les conditions sont les mêmes qu'à l'exemple 1 ci-dessus, sauf en ce qui concerne les paramètres donnés dans le tableau 1 ci-dessous.

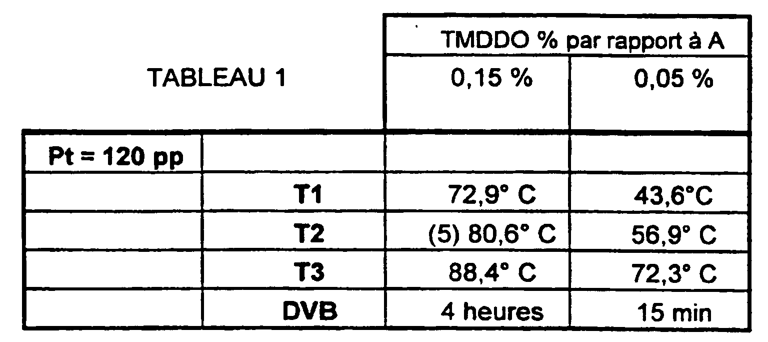

### Commentaires :

On peut mettre en oeuvre des systèmes silicones très réactifs avec de très courtes DVB, conduisant à un produit final satisfaisant les exigences d'application requises.

## Revendications

1. Procédé d'enduction en continu d'une bande de support défilante en vue de lui conférer des propriétés anti-adhérentes, ladite enduction étant réalisée à l'aide d'une composition silicone comprenant au moins un polyorganosiloxane A porteur de groupements réactifs GRa, au moins un réticulant B porteur de groupements réactifs GRb et réticulable par hydrosilylation ou par déshydrogénopolycondensation, une quantité efficace de catalyseur C, et éventuellement au moins un inhibiteur D de réticulation et/ou au moins un modulateur d'adhérence E et/ou au moins un autre constituant F,
ledit procédé consistant essentiellement en les étapes suivantes:
0) la préparation en continu d'au moins un prémélange AB et/ou AC et/ou BC quand ce dernier est faisable, ledit prémélange se faisant pour les composants autres que C au moyen d'au moins une chambre de prémélange amont (**2**_{**1**}) et de moyens de prémélange statique aval (**2**_{**2**}),
1) la préparation en continu d'un mélange homogène des constituants A, B et C, ledit mélange homogène se faisant pour les composants A, B, C, éventuellement D et/ou E et/ou F au moyen d'une chambre de mélange amont (**3**_{**1**}) et des moyens de mélange statique aval (**3**_{**2**}),
les étapes 0) et 1) étant conduites :
(j) en choisissant la nature et les proportions des constituants A, B et C de manière à ce que :
- la viscosité dynamique à 25°C du mélange homogène est inférieure ou égale à 10 000 mPa.s, et
- le POS A est sélectionné dans le groupe comprenant :
- les POS qui présentent, par molécule, au moins deux groupes GRa, situés dans la chaîne et/ou en bout(s) de chaîne, consistant chacun dans un groupe alcényle en C₂-C₁₀ lié au silicium,
- et leurs mélanges,
tandis que le réticulant B consiste dans au moins un POS présentant, par molécule, au moins deux groupes GRb consistant chacun en un atome d'hydrogène lié au silicium, situés dans la chaîne et/ou en bout(s) de chaîne :
A réagissant avec B par hydrosilylation et le ratio molaire GRb : GRa se situe dans l'intervalle allant de 1 à 5 ;
(2j) en incorporant éventuellement au moins un constituant D et/ou E et/ou F à au moins l'un des constituants A, B, C, au prémélange ou au bain contenant les constituants A, B et C, et
(3j) en mettant en oeuvre des conditions de prémélange et de mélange homogène de manière à ce que :
- la Durée de Vie de Bain DVB. qui est le temps nécessaire au doublement de la viscosité dynamique mesurée à 30°C, soit inférieure à 4 H ;
- l'homogénéité du bain soit telle que sa signature par calorimétrie différentielle par balayage DSC comprenne au moins un pic gaussien présentant :
- une température T1 de début de pic,
- une température T2 de sommet de pic,
- une température T3 de fin de pic,
ce pic étant **caractérisé par** :
- i - T3 ≤ 110° C,
- ii - ΔT = T3 - T1 ≤ 30°C,et
- iii - ΔT = ΔT ref ± 10° C,
ΔT ref correspondant à T3ref - T1ref, obtenu à partir du pic de signature DSC d'un mélange de référence constitué de A, B, C et éventuellement de D et/ou E et/ou F réalisé selon le protocole Pr permettant d'établir le mélangé de référence ABC pour parvenir au paramètre comparatif ΔTref des pics DSC du mélange, qui consiste à mélanger les mêmes constituants A, B, C dans les mêmes proportions en vue de réaliser dans un récipient, un mélange de 250 cm³, sous agitation modérée à l'aide d'une agitation à hélice toumant à 1000 tours/min pendant au moins 15 min, à température ambiante (25° C), et
- le débit de production du mélange homogène est compris entre une valeur correspondant au taux de consommation du mélange sur le (ou les) site(s) d'enduction et une valeur déterminant la constitution d'une réserve-tampon,
cette valeur du débit étant telle que la durée d séparant la mise en présence des composants A, B et C et éventuellement D et/ou E et/ou F et le moment d'application du mélange homogène sur la bande support défilante soit inférieure ou égale à la DVB, puis
2) l'acheminement, simultanément ou non, du mélange homogène directement du mélangeur vers le (ou les) site(s) d'enduction,
3) l'enduction de la bande-support défilante avec la composition, et
4) l'étape où l'on permet à la réticulation thermique de se produire.

2. Procédé selon la revendications 1, dans lequel :
- le POS A est sélectionné dans le groupe comprenant :
- les polydiorganosiloxanes portant au moins deux groupes GRa condensables ou hydrolysables, situés dans la chaîne et/ou en bout(s) de chaîne, consistant chacun dans un groupe OR lié au silicium où R est un atome d'hydrogène ou un radical alkyle en C₁-C₆,
- et leurs mélanges ; et
- le réticulant B est du type POS B porteur de GRb = H ;
avec A réagissant avec B par déshydrogénopolycondensation et le ratio molaire GRb : GRa se situe dans l'intervalle allant de 1 à 5.

3. Procédé selon l'une quelconque des revendications 1 à 2, **caractérisé en ce que** la réticulation entre A et B intervient au moins en partie selon un mécanisme d'hydrosilylation et **en ce que** l'inhibiteur D est choisi dans le groupe comprenant : les alcools α-acétyténiques, les azodicarboxylates, les esters maléiques, et leurs mélanges.

4. Procédé selon l'une quelconque des revendications 1 à 3, **caractérisé en ce que** l'on met en oeuvre au moins un modulateur d'adhérence E sélectionné dans le groupe de composés suivants :
- les résines POS modulateurs à fonctions Si-alcényle ;
- les résines POS modulateurs à fonction SiH ;
- les résines POS modulateur à fonction Si-OH, constituée d'au moins deux types de motifs siloxy différents « M » (R₃SiO_{1/2}). « Q » (SiO₂) et/ou « T » (RSiO_{3/2}) et éventuellement « D » (R₂SiO_{2/2}), les radicaux organiques étant identiques ou différents et représentant des groupes alkyle ou cycloalkyle en C₁-C₁₈ ou phényle, au moins 80 % molaire des radicaux organiques représentant un groupe méthyle, ladite résine contenant au moins 0.1 % molaire de groupes hydroxyles liés au silicium avec un rapport nombre de motifs « M »/nombre de motifs « Q » et/ou « T » de 0,6-1, le nombre de motifs « D » éventuels étant de 0,5-10 pour 100 moles de résine :
- les mélanges de deux ou de plus de deux des résines précitées entre elles ;
- ou les mélanges d'au moins une des résines précitées avec les solvants dits « réactifs ».

5. Procédé selon l'une quelconque des revendications 1 à 4, **caractérisé en ce que** le mélange préparé comprend au moins un autre composant F constitué :
(i) par un solvant organique aliphatique et/ou aromatique ne participant pas à la réaction, ce solvant étant notamment celui dans lequel A et/ou B sont dissous pour constituer une solution qui représente la forme sous laquelle A et/ou B sont mis en oeuvre dans le procédé,
(2i) et/ou par de l'eau.

6. Procédé selon l'une quelconque des revendications 1 à 5, **caractérisé en ce que** l'on fait en sorte que l'admission en quantités dosées des constituants A, B, C éventuellement D et/ou E et/ou F, au niveau du ou des sites de prémélange et/ou du ou des sites de mélange de C avec les autres composants, s'effectue de manière séquencée et itérative.

7. Procédé selon l'une quelconque des revendications 1 à 6, **caractérisé en ce que** l'on met en oeuvre, pour chaque constituant A, B, C, éventuellement D et/ou E et/ou F de la composition, des moyens de dosage volumétrique aptes à assurer l'alimentation en quantités dosées de chacun d'eux, ainsi que, au moins partiellement, leur circulation selon un flux continu, tout au long de la chaîne opératoire.

8. Dispositif pour la mise en oeuvre du procédé selon l'une quelconque des revendications 1 à 7, **caractérisé en ce qu'**il comprend :
- des moyens de dosage (**1**) des composants A, B, C, éventuellement D et/ou E et/ou F,
- des moyens de prémélange (**2**) des composants autre que C,
- des moyens de mélange homogène (**3**) des composants A, B, C. éventuellement D et/ou E et/ou F,
- au moins un organe d'enduction (**4**) de la bande support défilante (**7**),
- des moyens d'acheminement (**5**) du mélange homogène du ou des sites (moyens) de mélange vers l'organe d'enduction, et du ou des sites (moyens) de prémélange vers les moyens de mélange, et
- des moyens de chauffage (**6**) de la bande-support (**7**) enduite.

9. Dispositif selon la revendication 8, **caractérisé en ce que** les moyens de prémélange (**2**) comprennent au moins une chambre de prémélange amont (**2**_{**1**}) et des moyens de prémélange statique aval (**2**_{**2**}),
et **en ce que** les moyens de mélange homosène (**3**) comprennent au moins une chambre de mélange amont (**3**_{**1**}) et des moyens de mélange statique aval (**3**_{**2**}).

## Patentansprüche

1. Verfahren zur kontinuierlichen Beschichtung eines vorbeilaufenden Trägerbandes im Hinblick darauf, ihm Antihaft-Eigenschaften zu verleihen, wobei die genannte Beschichtung mit Hilfe einer Silicon-Zusammensetzung realisiert wird, die mindestens ein Polyorganosiloxan A als Träger von reaktiven Gruppen GRa, mindestens ein Vernetzungsmittel B als Träger von reaktiven Gruppen GRb und vernetzbar durch Hydrosilylierung oder durch Dehydrogenopolykondensation, eine wirksame Menge eines Katalysators C und gegebenenfalls mindestens einen Inhibitor für die Vernetzung und/oder mindestens einen Haftmodulator E und/oder mindestens einen anderen Bestandteil F umfaßt, wobei das genannte Verfahren im wesentlichen aus den folgenden Stufen besteht:
0) kontinuierliche Herstellung von mindestens einer Vormischung AB und/oder AC und/oder BC, wenn diese letztere möglich ist, wobei das genannte Vormischen bei den Bestandteilen, die anders sind als C, mit Hilfe von mindestens einer stromaufwärts liegenden Vormischkammer (2₁) und von stromabwärts liegenden statischen Mitteln zum Vormischen (2₂) erfolgt,
1) kontinuierliche Herstellung einer homogenen Mischung der Bestandteile A, B und C, wobei das genannte homogene Mischen bei den Bestandteilen A, B, C, gegebenenfalls D und/oder E und/oder F mit Hilfe einer stromaufwärts liegenden Mischkammer (3₁) und von stromabwärts liegenden statischen Mitteln zum Mischen (3₂) erfolgt, und
wobei die Stufen 0) und 1) durchgeführt werden:
j) indem man die Beschaffenheit und die Verhältnisse der Bestandteile A, B und C in der Weise auswählt, daß
- die dynamische Viskosität bei 25 °C der homogenen Mischung unterhalb oder gleich 10.000 mPa.s beträgt, und
- das POS A aus der Gruppe gewählt wird, die umfaßt:
- die POS, die pro Molekül mindestens zwei Gruppen GRa aufweisen, die sich in der Kette und/oder am Ende(n) der Kette befinden und jeweils aus einer Gruppe Alkenyl mit 2 bis 10 Kohlenstoffatomen, gebunden an das Silicium, bestehen,
- und ihre Mischungen,
während das Vernetzungsmittel B aus mindestens einem POS besteht, das pro Molekül mindestens zwei Gruppen GRb aufweist, die jeweils aus einem Wasserstoffatom bestehen, gebunden an das Silicium, und sich in der Kette und/oder am Ende(n) der Kette befinden;
wobei A mit B durch Hydrosilylierung reagiert und das molare Verhältnis GRb : GRa im Intervall von 1 bis 5 liegt;
(2j) indem man gegebenenfalls mindestens einen Bestandteil D und/oder E und/oder F zu mindestens einem der Bestandteile A, B, C, zur Vormischung oder zu dem Bad gibt, das die Bestandteile A, B und C enthält, und
(3j) indem man die Bedingungen des Vormischens und des homogenen Mischens in der Weise einstellt, daß
- die Lebensdauer des Bades DVB, welche die zur Verdopplung der dynamischen Viskosität, gemessen bei 30 °C, erforderliche Zeit darstellt, unter 4 Stunden liegt,
- die Homogenität des Bades derart ist, daß seine durch Differential-Kalorimetrie mittels Abtastung DSC ermittelte Signatur mindestens einen Pic (Gaussien) umfaßt, der aufweist:
- eine Temperatur T1 des Beginns des Pic,
- eine Temperatur T2 des Scheitelpunkts des Pic,
- eine Temperatur T3 des Endes des Pic,
wobei dieser Pic **gekennzeichnet ist durch**:
- i - T3 ≤ 110 °C
- ii - ΔT = T3 - T1 ≤ 30 °C, und
- iii - ΔT = ΔT ref ± 10 °C;
ΔT ref entspricht T3 ref - T1 ref, erhalten ausgehend vom Pic der Signatur DSC einer Referenzmischung, bestehend aus A, B, C und gegebenenfalls D und/oder E und/oder F, realisiert gemäß der Vorschrift Pr, die es ermöglicht, die Referenzmischung ABC einzurichten, um zu dem Vergleichsparameter ΔT ref der Pics DSC der Mischung zu gelangen, die im Vermischen der gleichen Bestandteile A, B, C mit den gleichen Verhältnissen im Hinblick darauf besteht, in einem Behälter eine Mischung von 250 cm³ unter leichtem Rühren mit Hilfe eines Propeller-Rührers bei einer Rührgeschwindigkeit von 1000 Umdr./min während mindestens 15 Minuten bei Umgebungstemperatur (25 °C) zu realisieren, und
- der Durchsatz der Produktion der homogenen Mischung zwischen einem Wert, entsprechend dem Verbrauch der Mischung auf der (oder den) Stelle(n) der Beschichtung, und einem Wert liegt, der die Bildung eines Puffer-Reservoirs bestimmt,
wobei dieser Wert des Durchsatzes derart ist, daß die Dauer d, die das Zusammenfügen der Bestandteile A, B und C und gegebenenfalls D und/oder E und/oder F und den Moment der Anwendung der homogenen Mischung auf dem vorbeilaufenden Trägerband voneinander trennt, unter oder gleich der DVB ist, und anschließend
2) Transport, gleichzeitig oder nicht, der homogenen Mischung direkt vom Mischer zu der (oder den) Stelle(n) der Beschichtung,
3) Beschichtung des vorbeilaufenden Trägerbandes mit der Zusammensetzung, und
4) Stufe, bei der.man ermöglicht, daß sich die thermische Vernetzung vollzieht.

2. Verfahren nach Anspruch 1, bei dem
- das POS A aus der Gruppe gewählt wird, die umfaßt:
- die Polydiorganosiloxane, die mindestens zwei kondensierbare oder hydrolysierbare Gruppen GRa tragen, die sich in der Kette und/oder am Ende(n) der Kette befinden, bestehend jeweils aus einer an das Silicium gebundenen Gruppe OR, worin R ein Wasserstoffatom oder ein Rest Alkyl mit 1 bis 8 Kohlenstoffatomen ist,
- und ihre Mischungen; und
- das Vernetzungsmittel B vom Typ POS B ist, Träger von GBr = H;
wobei A mit B durch Dehydrogenopolykondensation reagiert und das molare Verhältnis GRb : GRa im Intervall von 1 bis 5 liegt.

3. Verfahren nach irgendeinem der Ansprüche 1 bis 2, **dadurch gekennzeichnet, daß** die Vernetzung zwischen A und B mindestens teilweise einen Mechanismus der Hydrosilylierung einbezieht und daß der Inhibitor D aus der Gruppe gewählt wird, die umfaßt: die α-acetylenischen Alkohole, die Azodicarboxylate, die Maleinsäureester und ihre Mischungen.

4. Verfahren nach irgendeinem der Ansprüche 1 bis 3, **dadurch gekennzeichnet, daß** man mindestens einen Haftmodulator E einsetzt, gewählt aus der Gruppe der folgenden Verbindungen:
- die Modulatorharze POS mit Funktionen Si-Alkenyl;
- die Modulatorharze POS mit Funktionen SiH;
- die Modulatorharze POS mit Funktionen Si-OH, bestehend aus mindestens zwei Typen von unterschiedlichen Struktureinheiten Siloxy "M" (R₃SiO_{1/2}), "Q" (SiO₂) und/oder "T" (RSiO_{2/2}) und gegebenenfalls "D" (R₂SiO_{2/2}), wobei die organischen Reste gleich oder verschieden sind und Gruppen Alkyl oder Cycloalkyl mit 1 bis 18 Kohlenstoffatomen oder Phenyl aufweisen, und wobei mindestens 80 Mol-% der organischen Reste eine Gruppe Methyl darstellen, das genannte Harz mindestens 0,1 Mol-% an das Silicium gebundene Gruppen Hydroxyl enthält mit einem zahlenmäßigen Verhältnis von Struktureinheiten "M"/Anzahl der Struktureinheiten "Q" und/oder "T" von 0,6-1, wobei die eventuelle Anzahl von Struktureinheiten "D" 0,5-10 pro 100 Mol Harz beträgt:
- die Mischungen von zwei oder mehr als zwei der genannten Harze untereinander; oder
- die Mischungen von mindestens einem der genannten Harze mit den sogenannten "reaktiven" Lösungsmitteln.

5. Verfahren nach irgendeinem der Ansprüche 1 bis 4, **dadurch gekennzeichnet, daß** die hergestellte Mischung mindestens einen weiteren Bestandteil F umfaßt, bestehend:
(i) aus einem aliphatischen und/oder aromatischen organischen Lösungsmittel, das an der Reaktion nicht teilnimmt, wobei dieses Lösungsmittel insbesondere dasjenige ist, in dem A und/oder B gelöst sind, um eine Lösung zu bilden, welche die Form darstellt, in der A und/oder B in dem Verfahren eingesetzt werden,
(2i) und/oder aus Wasser.

6. Verfahren nach irgendeinem der Ansprüche 1 bis 5, **dadurch gekennzeichnet, daß** man in der Weise vorgeht, daß die Zuführung der Bestandteile A, B, C, gegebenenfalls D und/oder E und/oder F in dosierten Mengen im Bereich von der oder den Stelle(n) der Vormischung und/oder von der oder den Stelle(n) der Mischung von C mit den anderen Bestandteile in aufeinanderfolgender oder wiederholter Art und Weise erfolgt.

7. Verfahren nach irgendeinem der Ansprüche 1 bis 6, **dadurch gekennzeichnet, daß** man für jeden Bestandteil A, B, C, gegebenenfalls D und/oder E und/oder F der Zusammensetzung Mittel zur volumetrischen Dosierung einsetzt, die geeignet sind, die Speisung von jedem von ihnen in dosierten Mengen zu gewährleisten, sowie mindestens teilweise ihren Kreislauf gemäß einem kontinuierlichen Fluß längs der Verfahrenskette zu sichern.

8. Vorrichtung zur Durchführung des Verfahrens nach irgendeinem der Ansprüche 1 bis 7, **dadurch gekennzeichnet, daß** sie umfaßt:
- Mittel zur Dosierung (1) der Bestandteile A, B, C, gegebenenfalls D und/oder E und/oder F,
- Mittel zum Vormischen (2) der Bestandteile außer C,
- Mittel zum homogenen Mischen (3) der Bestandteile A, B, C, gegebenenfalls D und/oder E und/oder F,
- mindestens ein Beschichtungsorgan (4) für das vorbeilaufende Trägerband (7),
- Mittel zum Transport (5) der homogenen Mischung von der oder den Stelle(n) (Mitteln) des Mischens zum Beschichtungsorgan und von der oder den Stelle(n) (Mitteln) des Vormischens zu den Mitteln des Mischens, und
- Mittel zum Erwärmen (6) des beschichteten Trägerbandes (7).

9. Vorrichtung nach Anspruch 8, **dadurch gekennzeichnet, daß** die Mittel zum Vormischen (2) mindestens eine stromaufwärts liegende Vormischkammer (2₁) und stromabwärts liegende statische Mittel zum Vormischen (2₂) umfassen, und **dadurch**, daß die Mittel zum homogenen Mischen (3) mindestens eine stromaufwärts liegende Mischkammer (3₁) und stromabwärts liegende statische Mittel zum Mischen (3₂) umfassen.

## Claims

1. Process for the continuous coating of a travelling support strip in order to give it non-stick properties, the said coating being carried out using a silicone composition comprising at least one polyorganosiloxane A bearing reactive groups RGa, at least one curing agent B bearing reactive groups RGb and which can be cured by hydrosilylation or by dehydrogenopolycondensation, an effective amount of catalyst C, and optionally at least one cure inhibitor D and/or at least one adhesion modifier E and/or at least one other constituent F,
the said process essentially consisting of the following steps:
0) the continuous preparation of at least one premix AB and/or AC and/or BC when the latter is feasible, the said premixing taking place for the components other than C by means of at least one upstream premixing chamber (**2**_{**1**}) and downstream static premixing means (**2**_{**2**});
1) the continuous preparation of a homogeneous compound of the constituents A, B and C, the said homogeneous compound being produced, in the case of the components A, B, C, optionally D and/or E and/or F by means of an upstream mixing chamber (**3**_{**1**}) and downstream static mixing means (**3**_{**2**}),
steps 0) and 1) being carried out:
(j) by choosing the nature and the proportions of the constituents A, B and C in such a way that:
- the dynamic viscosity at 25°C of the homogeneous compound is less than or equal to 10,000 mPa.s; and
- the POS A is selected from the group comprising:
- POSs that contain, per molecule, at least two groups RGa, located in the chain and/or at the chain end(s), each consisting of a C₂-C₁₀-alkenyl group linked to the silicon;
- and mixtures thereof,
while the curing agent B consists of at least one POS containing, per molecule, at least two groups RGb, each consisting of a hydrogen atom linked to the silicon, located in the chain and/or at the chain end(s), A reacting with B by hydrosilylation and the molar ratio RGb/RGa is within the range from 1 to 5;
(2j) by optionally incorporating at least one constituent D and/or E and/or F into at least one of the constituents A, B, C, into the premix or into the bath containing the constituents A, B and C; and
(3j) by employing premixing and homogeneous compounding conditions such that:
- the bath life BL, which is the time needed to double the dynamic viscosity measured at 30°C, is less than 4h;
- the bath homogeneity is such that its DSC (differential scanning calorimetry) signature comprises at least one Gaussian peak having, a peak start temperature T1, a peak summit temperature T2, and a peak end temperature T3,
this peak being **characterized by**:
(i) T3 ≤ 110°C,
(ii) ΔT = T3 - T1 ≤ 30°C,
and
(iii) ΔT = ΔT_{ref} ± 10°C,
ΔT_{ref} corresponding to T3_{ref}-T1_{ref}, obtained from the DSC signature peak of a reference compound consisting of A, B, C and optionally D and/or E and/or F produced according to the protocol Pr for establishing the reference compound ABC in order to arrive at the comparative parameter ΔT_{ref} of the DSC peaks of the compound, which protocol consists in mixing the same constituents A, B, C in the same proportions in order to prepare, in a container, a compound of 250 cm³ in volume, with moderate stirring using an impeller rotating at 1000 rpm for at least 15 min, at room temperature (25°C); and
- the production flow rate of the homogeneous compound is between a value corresponding to the rate of consumption of the compound on the coating site(s) and a value which determines the constitution of a buffer reserve, this flow rate value being such that the time t separating the time at which the components A, B and C and optionally D and/or E and/or F are brought together and the time of application of the homogeneous compound to the travelling support strip is less than or equal to the BL; then
2) conveying, simultaneously or otherwise, the homogeneous compound directly from the mixer to the coating site(s);
3) coating the travelling support strip with the composition; and
4) a step of allowing the heat curing to take place.

2. Process according to Claim 1, in which:
- the POS A is selected from the group comprising:
- polydiorganosiloxanes bearing at least two condensable or hydrolysable groups RGa, which are located in the chain and/or at the chain end(s), each consisting of an OR group linked to the silicon, where R is a hydrogen atom or a C₁-C₆-alkyl radical; and
- mixtures thereof; and
- the curing agent B is of the POS B type carrying RGb=H;
where A reacts with B by dehydrogenopolycondensation and the molar ratio RGb/RGa is in the interval from 1 to 5.

3. Process according to either one of Claims 1 and 2, **characterized in that** the crosslinking between A and B takes place at least partly according to a hydrosilylation mechanism and **in that** the inhibitor D is chosen from the group comprising: α-acetylenic alcohols, azodicarboxylates, maleic esters and mixtures thereof.

4. Process according to any one of Claims 1 to 3, **characterized in that** at least one adhesion modifier E is used, this being selected from the group of compounds below:
- POS modifying resins containing Si-alkenyl functions;
- POS modifying resins containing an SiH function;
- POS modifying resins containing an Si-OH function, consisting of at least two different types of siloxy units, namely "M" (R₃SiO_{1/2}), "Q" (SiO₂) and/or "T" (RSiO_{3/2}) and optionally "D" (R₂SiO_{2/2}), the organic radicals being identical or different and representing C₁-C₁₈-alkyl or cycloalkyl groups or phenyl groups, at least 80 mol% of the organic radicals representing a methyl group, the said resin containing at least 0.1 mol% of hydroxyl groups attached to the silicon with a number of "M" units/number of "Q" and/or "T" units ratio of 0.6-1, the number of optional "D" units being 0.5-10 per 100 mol of resin;
- mixtures of two or more than two of the abovementioned resins with each other;
- or mixtures of at least one of the abovementioned resins with so-called "reactive" solvents.

5. Process according to any one of Claims 1 to 4, **characterized in that** the compound prepared comprises at least one other component F consisting:
(i) of an aliphatic and/or aromatic organic solvent which does not take part in the reaction, this solvent preferably being the one in which A and/or B are dissolved to make a solution which represents the form in which A and/or B are used in the process;
(ii) and/or of water.

6. Process according to any one of Claims 1 to 5, **characterized in that** provision is made such that the admission of metered amounts of the constituents A, B, C, optionally D and/or E and/or F, into the site(s) for premixing and/or the site(s) for mixing C with the other components is carried out in a sequenced and repetitive manner.

7. Process according to any one of Claims 1 to 6, **characterized in that**, for each constituent A, B, C, optionally D and/or E and/or F of the composition, volumetric metering means are used which are capable of ensuring the supply of metered amounts of each of these constituents, as well as, at least partially, their circulation in a continuous flow, along the entire length of the operating line.

8. Device for carrying out the process according to any one of Claims 1 to 7, **characterized in that** it comprises:
· means (**1**) for metering the components A, B, C, optionally D and/or E and/or F;
· means (**2**) for premixing the components other than C;
· means (**3**) for homogeneously mixing the components A, B, C, optionally D and/or E and/or F;
· at least one member (**4**) for coating the travelling support strip (**7**);
· means (**5**) for conveying the homogeneous compound from the mixing site(s) (means) to the coating member, and from the premixing site(s) (means) to the mixing means; and
· means (**6**) for heating the coated support strip (**7**).

9. Device according to Claim 8, **characterized in that** the premixing means (**2**) comprise at least one upstream premixing chamber (**2**_{**1**}) and downstream static premixing means (**2**_{**2**}), and **in that** the homogeneous mixing means (**3**) comprise at least one upstream mixing chamber (**3**_{**1**}) and downstream static mixing means (**3**_{**2**}).
